# EUROPEAN PATENT APPLICATION

(11) **EP 4 029 381 A1**
(43) Date of publication of application: **20.07.2022**
(21) Application number: 21151789.1
(22) Date of filing: 15.01.2021
(51) Int. Cl.: A23G 1/30, A23G 1/36, A23G 1/48, A23G 9/48

(54) **CHOCOLATE COMPOSITION AND METHOD FOR OBTAINING THE SAME**

(71) Applicant: Barry Callebaut AG, 8005 Zurich (CH)
(72) Inventor: The designation of the inventor has not yet been filed
(74) Representative: LLR

(57) **Abstract**

The present invention relates to the use of tigernut flour for preventing fat bloom in a chocolate foodstuff, and a tigernut flour containing chocolate and it's use for dipping a frozen foodstuff.

## Description

### Field of the invention

The invention relates to the field of chocolate products and method for obtaining chocolate products.

### Prior art

What is generally called "chocolate", "dark chocolate" or "milk chocolate", is usually obtained by blending cocoa liquor, eventually cocoa nibs, with sugar (or other sweeteners), cocoa butter, butter fat (oil), milk powder and/or milk crumbs and emulsifier. Flavouring agents such as vanillin, cinnamon, cassia oil, essential oil of almond, lemon, orange etc..., varieties of balsams, resins and combination thereof are commonly added to the mix. Butter oil is derived from unsalted dairy butter by dehydration and removal of curd. It is also used as an anti-bloom agent in dark chocolate. Other fats than cocoa butter and butter oil may only be used under some specific conditions which relate to the quantities used and to their physical and chemical properties. If they are not respected, the use of the term "chocolate" can be prohibited by national legislation. These may vary. Hence the definition of a chocolate or a chocolate composition in this specification will be used in its broadest meaning and refer to the presence of cocoa liquor and/or cocoa butter in a foodstuff.

Manufacturing processes for chocolates involve the basic operations of mixing of the ingredients, refining of the mixture, pasting or partial liquefaction of the refined mixture and conching (or an alternative process), and finally adjustment of viscosity and flavouring of the chocolate.

Milk products are major ingredients in the chocolate and confectionary industry. Milk chocolate is a popular product whose taste and mouthfeel is extremely distinctive. However the use of milk makes this product unsuitable for some consumers (vegetarian or vegan consumers or peoples developing milk allergies). Hence, a great number of dairy free alternatives to "cow's milk" chocolates have been trialled. The most frequent alternative to cow's milk for chocolate is a mixture of rice glucose syrup, rice flour and inulin. Such products are not satisfactory from the point of view of texture (it is too hard) and mouthfeel. Furthermore, from a sensory point as they are high in sweetness and fail to replicate the creaminess of a milk chocolate that consumers appreciate.

Cyperus esculentus Lativum (also called chufa, tigernut, atadwe, yellow nutsedge, and earth almond) is a crop of the sedge family widespread across much of the world. C. esculentus is cultivated for its edible tubers, called earth almonds or tigernuts, as a snack food and for the preparation of horchata de chufa, a sweet, milk-like beverage. Soaked tigernuts are blended with water to produce a whitish liquid called chufa milk which is flavoured by adding e.g. sugar, salt, spices etc...to obtain the horchata drink. Flour of tigernuts is sometimes added to biscuits and other bakery products as well as in making oil, soap, and starch extracts. It is also used for the production of nougat, jam, beer, and as a flavouring agent in ice cream and in the preparation of kunnu (a local beverage in Nigeria).

Chocolate compositions are particularly prone to fat bloom. Fat bloom is a whitish, greyish coating on the surface of milk or dark chocolate. It has a greasy appearance as it arises from changes in the fat structure and from fat crystals appearing on the surface of the chocolate. It can be caused by unsuitable tempering, incorrect cooling methods, warm storage conditions, the addition of fats incompatible with chocolate butter, abrasion and finger marking (particularly under warm condition). Fat bloom appears in particular when chocolate is used to enrobe centres which comprise soft fat, such as praliné filling or a mixture of nut paste and chocolate. Fat bloom does not harm the eating qualities of the chocolate but is very detrimental to its appearance. Consumers are very sensitive to the appearance of a chocolate product and fat bloom has to be avoided. Dairy-products used in particular in milk chocolate are known to delay fat bloom in chocolate. As mentioned in the thesis "Process development and evaluation of tiger nut based chocolate products" by Frank A. Asante, published in 2015, Engineering, by the KWAME NKRUMAH University of Science and technology, Kumasi, Ghana, cow's milk is regarded as improving the shelf life of chocolate products by inhibiting fat bloom and playing an important role in taste and colour. The thesis further reports that the high level of oil in tigernut reduces its potential as an ingredient in chocolate bars because many vegetable oils have been found to reduce the formation of stable β crystals resulting in reduced gloss, texture and resistance to heat and fat bloom. (p. 114). Tigernut products are thus not seen as a suitable alternative to cow's milk in the manufacture of chocolate because of its high vegetable fat content. Hence, the use of a tigernut extract is widely seen as unsuitable to replace dairy products because its fat content would be likely to promote fat bloom. The amount of tigernut products in solid chocolate products have been limited to a few percent in order to prevent early onset of fat bloom.
Furthermore, chocolate is used as a very popular coating for ice cream products. Brittleness is a very important characteristic of ice cream coating. During production and/or transport, unwanted breakage of the coating may occur, which, of course, is not desired by the consumer, but is a common problem in these applications. It is a standard process to add butter oil to a chocolate composition for ice dipping: the butter oil provides elasticity and resistance to unwanted breakage. On average, the fat composition of an elastic coating should contain a minimum of 20 wt. % butter fat and 80 wt. % cocoa butter. In dairy-free compositions, butter fat cannot be added to the recipe, meaning that it is challenging to develop ice coatings that can be also consumed by vegetarian and vegan people or people having milk allergies, and that have acceptable elasticity and resistance to breakage.
One aim of the invention is to overcome at least one of the prior art drawbacks.
Another aim of the invention is to provide a chocolate that minimises and/or delays fat bloom.
Still another aim of the invention is to provide a chocolate useful as a coating for a frozen product that is resistant to breakage.

### Description of the invention

One object of the invention is the use of a tigernut product, and in particular a tigernut flour, for preventing, or delaying, or both, fat bloom in a chocolate foodstuff.
It has now been found most surprisingly that the use of tigernuts, and in particular the use of tigernut flour or powder (that is possibly roasted tigernut powder without affecting the tigernut flour properties on fat bloom delay), in chocolate product have a limiting effect on fat bloom which is better than the one associated with dairy product. It was further found that even a high percentage of tigernut flour not only limits fat bloom but also provides a chocolate with an excellent mouth feel and taste and/or a better nutritional profile The limitation of fat bloom is particularly potent to prevent/delay fat blooming on confectionary such as chocolate bonbons where chocolate enrobes a centre made of nuts and sugar (praline) possibly containing a fatty mixture of chocolate.
"Chocolate" definition varies according to the Countries and the legislations. As above mentioned, chocolate is the generic name for the homogenous products that are obtained by an adequate manufacturing process from cocoa materials which may be combined with milk products, sugars and/or sweeteners, and other additives or other edible foodstuffs, but excluding addition of flour and starch (except for specific types of products) and animal fats other than milk fat. Different types of chocolate products exist in different countries, and the specific minimum/maximum levels of the required ingredients and the optional ingredients for each type of chocolate product are defined in local legislation.
In the invention, the term "chocolate" is used to designate not only standard dark chocolate, but also includes milk chocolate, white chocolate, ruby chocolate and all the substitute chocolates such as used in compounds, couverture or ice-cream coating.
Standard dark chocolate is commonly obtained by mixing cocoa liquor with cocoa butter and sugar, followed by refining, conching, and tempering. Milk chocolate is prepared in a similar way but includes addition of milk powder, preferably cow's milk powder. The cocoa butter may partially or totally be replaced by cocoa butter substitutes such as stearic fraction from palm kernel oil, coconut oil or palm oil or mixtures thereof. These chocolates, prepared as defined above, are also called substitute chocolates. A white chocolate is a milk chocolate without cocoa liquor or powder and is prepared in a similar way, using cocoa butter instead of liquor with sugar and milk or another dairy product such as milk powders.
Addition of tigernut flour in a chocolate as defined in the invention, or more commonly a chocolate foodstuff as defined in the invention, is convenient for human food since it is non allergenic, it is not a cereal-containing product.It is also appropriated since the nutritional balance of the tigernut flour constitutes a balanced nutritional composition comprising sugars, healthy fats (rich in oleic acid and linoleic acid), proteins, fibers, vitamin E and minerals such as iron.
The tigernut flour-containing chocolates as described herein can be easily eaten /consumed by people having either lactose intolerance, or that do not wish to eat/consume animal products (such as vegetarians or vegans). Thus, the tigernut flour containing chocolates according to the invention is appropriated for all people that like chocolates, whatever their diet.

The absence of other fibres than those contained in the tigernut flour ingredients allow higher conching temperature of the chocolate and potentially better rheology of the chocolate.
Other advantages of using tigernut flour compared to milk, or milk fat, is the smaller carbon footprint.
Advantageously, the invention relates to the use as defined above, wherein said chocolate foodstuff has a centre which is enrobed with a chocolate, wherein said centre does have more than 20 wt%, preferably from 20% to 80% wt.% of (preferably vegetable) fat, such as cocoa butter and fat from nuts.
Indeed, food stuff containing cocoa butter and/or fat and in particular fat from nuts, such as hazelnut, almonds, walnuts, pecan nuts, cashew, etc., that is enrobed by chocolate is easily and rapidly submitted to fat blooming. This is particularly the case for pralines. Thus, when a chocolate containing tigernut flour is used to enrobe the centre of a chocolate foodstuff, the fat blooming is significantly reduced on the chocolate.
More advantageously, the invention relates to the use as defined above, wherein said tigernut flour consists of particles having a particle size (D₉₀) of less than 800 µm, preferably less than 400 µm, the size of the particles being measured by laser diffraction. Laser diffraction measures particle size distributions by measuring the angular variation in intensity of light scattered as a laser beam passes through a dispersed particulate sample. Laser diffraction as measured in the invention is carried out by using a Malvern diffractometer, and the data are collected according to the D₉₀ parameter (also called Dv(90) parameter). This parameter signifies the point in the size distribution, up to and including which, 90% of the total volume of material in the sample is contained. This means that if the D₉₀ is 400 µm, 90% of the sample has a size of 400 µm or smaller. A D₉₀ of less than 800 µm provides particular good results in terms of fat bloom and/or brittleness and good mouthfeel of the chocolate.
More advantageously, the invention relates to the use as defined above, wherein said chocolate foodstuff further comprise, or essentially consists of, a sweetener, in particular sugar, cocoa liquor (also called cocoa mass), an emulsifier, such as lecithin, and flavouring. In other words, the invention relates to the use as defined above, wherein both chocolate and centre comprise a sweetener, in particular sugar, cocoa liquor, an emulsifier, such as lecithin, a flavouring. Tigernut flour is preferably present only in the chocolate, but can be present in both chocolate and centre.

To clarify the definition, the chocolate foodstuff as defined above has advantageously:
- a centre comprising cocoa liquor, a sweetener, such as sugar, an emulsifier, such as lecithin, a flavouring agent, and possibly containing tigernut flour, and
this centre being enrobed by:
- a chocolate (i.e. a chocolate coating or enrobage) that also comprises cocoa liquor, a sweetener such as sugar, emulsifier, such as lecithin, flavouring agent and comprises tigernut flour.
More advantageously, the core/centre can also contain one or more nut powders or pastes. nut powders or pastes are commonly almond, or hazelnut powders or pastes, or a mixture thereof. More advantageous, the invention relates to the use as defined above, wherein said chocolate foodstuff is a dairy-free chocolate.
Dairy free chocolate" is a chocolate as defined above, having a contamination of 0.05mg/kg milk traces (lowest detection limit). This determination of milk traces is well known in the art by using an ELISA test (for instance identifying presence of casein).

More advantageously, the invention relates to the use of a tigernut product, preferably a tigernut flour, as defined above, for preventing fat bloom in a chocolate foodstuff, said chocolate foodstuff comprising a chocolate, said chocolate comprising or being constituted essentially by, or constituted by
- from 20 to 60 wt. %, of a sweetener such as a sugar, a sugar alcohol and/or a mixture thereof: and
- from 0 to 60 wt. % of cocoa liquor or
- from 0 to 50 wt.%, preferably from 0 to 30wt. % of cocoa butter, or
- both
the chocolate composition comprising at least either cocoa liquor or cocoa butter.
More advantageously, the above-mentioned chocolate comprises from 6 to 40 wt.%, preferably from 8 to 40 % of tigernut products, preferably flour.
In the invention, from "6 to 40 wt.% of tigernut product, preferably flour" means that the chocolate or foodstuff contains 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, 30, 30.5, 31, 31.5, 32, 32.5, 33, 33.5, 34, 34.5, 35, 35.5, 36, 36.5, 37, 37.5, 38, 38.5, 39, 39.5 or 40 wt. % of tigernut product, preferably flour.

It is also hereby disclosed a chocolate composition of the invention comprising:
- from 20 to 60 wt. % of a sweetener such as a sugar and/or sugar alcohols and
- from 6 to 40 wt. %, of tigernut product, preferably tigernut flour,
- from 0 to 60 wt. % of cocoa Mass/liquor, and/or
- from 0 to 30 wt. % cocoa butter,
the composition comprising at least either cocoa liquor or cocoa butter.
Another chocolate composition of the invention comprises:
- from 20 to 60 wt. % of sweeteners such as a sugar and/or sugar alcohol: and
- from 8 to 40 wt.% product, preferably tigernut flour,
- from 0 to 60 wt. % of cocoa Mass/liquor, and/or
- from 0 to 30 wt.% cocoa butter,
wherein the composition comprises at least either cocoa liquor or cocoa butter.
Still another chocolate is also disclose as comprising
- from 30 to 50 wt. % of a sweetener such as a sugar and/or sugar alcohol,
- from 25 to 35 wt. % of cocoa butter,
- from 5 to 20 wt. % of cocoa liquor, and
- from 8 to 40 wt. % of product, preferably tigernut flour.
The invention also relates to a chocolate comprising:
- from 20 to 60 wt. % of a sweetener, such as a sugars and/or sugar alcohols;
- at least 20 wt. % of tigernut flour; and
   - from 0 to 60 wt. % of cocoa liquor, or
   - from 0 to 30 wt. % of cocoa butter, or
   - both,
wherein the chocolate comprises at least either cocoa liquor or cocoa butter.
Advantageously, the chocolate defined above comprises:
- from 30 to 50 wt. % of a sweetener,
- from 25 to 35 wt. % of cocoa butter,
- from 5 to 20 wt. % of cocoa liquor, and
- at least 20 wt. % of tigernut flour.
More advantageously, the above-mentioned chocolate comprises from 20 to 40 wt. % of tigernut flour.
Therefore, a more advantageous chocolate according to the invention comprises:
- from 30 to 50 wt. % of a sweetener,
- from 25 to 35 wt. % of cocoa butter,
- from 5 to 20 wt. % of cocoa liquor, and
- from 20 to 40 wt. % of tigernut flour.
As previously mentioned, the chocolate composition of the invention shows a better ability to delay the occurrence of fat blooming, especially when compared to in a chocolate that does not contain tigernut flour. Alternatively or additionally, the chocolate, chocolate composition or foodstuff of the invention shows an equivalent or better ability to delay fat bloom compared to a chocolate containing milk.
Advantageously, the above-described chocolate/chocolate composition and chocolate foodstuff may contain cocoa nibs, and one or more flavouring agents and/or one or more emulsifier agents.
It is particularly advantageous that the free fat content of the mix described above is around 27 wt. %. This amount of free fat should not be too high nor too low to enable correct refining, and to obtain an homogenous mixture of the ingredients.
The chocolate is produced according to a process well known in the art, as exemplified in Example 1 below. Briefly, the ingredients are mixed together and blended in order to obtain an homogenous paste. The paste is then refined to obtain a powder having fineness of usually about 20 microns, and the resulting powder is conched at a temperature such as a temperature ranging from 45°C to 90°C.
Advantageously, the invention relates to the above defined chocolate, wherein said tigernut flour consists of particles having a D₉₀ particle size of less than 800 µm, preferably 400 µm, the size of the particles being measured by laser diffraction, as described above.
More advantageously, the invention relates to the above defined chocolate, wherein said chocolate product is dairy free.
More advantageously, the invention relates to the above defined chocolate, wherein said chocolate product has a solid fat content at 26°C which is ranging from 20 wt.% to 30 wt.%, preferably about 26 wt.%.
Advantageously the solid fat content at 20°C of the chocolate is ranging from 50 to 65%, more preferably ranging from 50 to 60%, measured with the stabilizing method at 26°C. Such chocolate/composition/foodstuff has a mouthfeel similar to the one of standard milk chocolate.
In another aspect, the invention relates to a chocolate foodstuff comprising, consisting essentially of or consisting of:
- a centre comprising at least 20 wt. % of fat, preferably a non-animal fat, more preferably a vegetable fat, preferably from cocoa and/or nuts; and
- a coating of said centre comprising or consisting essentially of the chocolate product as defined above,
wherein said chocolate preferably comprises at least 25 wt.% of said chocolate product.
In other words, the invention relates to a chocolate foodstuff comprising, consisting essentially of or consisting of:
- a centre comprising at least 20 wt. % of fat, preferably a non-animal fat, more preferably a vegetable fat, preferably from cocoa and/or nuts; and
- a coating of said centre comprising or consisting essentially of a chocolate comprising:
   * from 20 to 60 wt. % of a sweetener, such as a sugar, and/or sugar alcohols;
   * from 8 to 40 wt. % of tigernut flour; and
      ∘ from 0 to 60 wt. % of cocoa liquor , or
      ∘ from 0 to 50 wt. %, preferably from 0 to 30 wt. % of cocoa butter, or
      ∘ both,
   wherein the chocolate comprises at least either cocoa liquor or cocoa butter,
wherein said chocolate preferably comprises at least 25 wt.% of said chocolate product. More advantageously the chocolate coating enrobes said centre.
The invention also relates to a method for manufacturing a chocolate foodstuff, and in particular a dairy free chocolate foodstuff, wherein said method comprises a step of mixing at least cocoa butter, cocoa mass/liquor and a sweetener with at least 8 wt.%, preferably from 8 to 40 wt. %, more preferably from 20 to 40 wt. %, of tigernut product, preferably a tigernut flour to obtain a mixture.
Advantageously, the invention relates to the method as defined above, wherein said tigernut flour consists of particles having a D₉₀ particle size of less than 800 microns, preferably 400 µm, the size of the particles being measured by laser diffraction, as defined above.
Advantageously, the invention relates to the above defined method, wherein said method includes the successive steps of blending said mixture to obtain a blended mixture, refining said blended mixture to obtain a refined mixture, conching said refined mixture to obtain a conched chocolate mixture, eventually finishing said conched mixture by adding a flavouring and/or an emulsifying agent to obtain a finished chocolate mixture
This method is illustrated by the Example 1 below where the steps of blending, refining and conching are detailed for a chocolate according to the invention.
An optional step of finishing the conched mixture can also be carried out at the end of the method in order to incorporate in the chocolate product obtained in the previous steps flavouring and/or emulsifying agents.
Advantageously, the invention relates to the above-described method, wherein said conched mixture is tempered.
Advantageously, when the conched mixture is submitted to a step of finishing in order to obtain a finished mixture, this is then this finished mixture which is tempered.
Optionality, the step of tempering can also be carried out after the step of conching and after the step of finishing.
More advantageously, the invention relates to the method above defined, wherein said conching step is carried out at a temperature lower than 90°C, preferably higher than or equal to 70°C. Thus the conching temperature may range from 75°C to 89°C, preferably from 70 to 80°C.
In one other aspect, the invention relates to the use of a tigernut flour-containing chocolate for dipping in a frozen foodstuff, in particular an ice cream or a dairy-free ice cream.
Advantageously, the invention relates to the use of a tigernut flour-containing chocolate as defined above, for dipping a frozen foodstuff, in particular an ice cream or a dairy-free ice cream.
More advantageously, the invention relates the use of a tigernut flour-containing chocolate comprising:
- from 20 to 60 wt. % of sugars, sweeteners and sugar alcohols: and
- from 6 to 40%wt tigernuts flour
- from 0 to 60 wt. % of Cocoa Mass/liquor, and/or
- from 0 to 50 wt. %, preferably from 0 to 30 % wt cocoa butter,
the chocolate comprising at least either cocoa liquor or cocoa butter,
for dipping in a frozen foodstuff, in particular an ice cream or a dairy-free ice cream.
More advantageously, the invention relates the use of a tigernut flour-containing chocolate comprising:
- from 30 to 50 wt. % of a sweetener,
- from 25 to 35 wt. % of cocoa butter,
- from 5 to 20 wt. % of cocoa liquor, and
- at least 8 wt. %, preferably at least 20% of tigernut flour, more preferably from 8 to 40 wt. %,
for dipping in a frozen foodstuff, in particular an ice cream or a dairy-free ice cream.

Frozen foodstuff such as ice cream, dairy-free ice cream, but also frozen fruit or frozen preparation of a dessert (such as insert) can be coated by chocolate. However, such a coating is fragile during manipulation and transport.
The inventors have shown that chocolate that contains tigernut flour, as shown in the invention, resists unwanted breakage within the same time compared to reference chocolate containing butter oil.
This is particularly appreciated by the manufacturer in order to preserve the integrity of the frozen foodstuff before their commercialisation.
The invention also relates to a frozen foodstuff, in particular an ice cream or a dairy-free ice cream, coated by a chocolate comprising a tigernut product, preferably a flour.
The invention also relates to a frozen foodstuff, in particular an ice cream or a dairy-free ice cream, coated by a tigernut flour-containing chocolate as defined above.
The invention also relates to a frozen foodstuff, in particular an ice cream or a dairy-free ice cream, covered by a tigernut flour-containing chocolate comprising:
- from 20 to 60 wt. % of sugars, sweeteners and sugar alcohols: and
- from 6 to 40wt. % tigernuts flour
- from 0 to 60 wt. % of Cocoa Mass/liquor, and/or
- from 0 to 30 % wt Cocoa Butter,
the chocolate comprising at least either cocoa liquor or cocoa butter,
Advantageously, the invention relates to the frozen foodstuff as defined above, comprising
- from 30 to 50 wt. % of a sweetener,
- from 25 to 35 wt. % of cocoa butter,
- from 5 to 20 wt. % of cocoa liquor, and
- at least 8 wt. %, preferably at least 20 wt. %, more preferably from 8 to 40 wt. %, of tigernut flour.

In the above mentioned uses, chocolate and chocolate foodstuff as defined above, it is advantageous that the chocolate/composition/foodstuff is a solid.
In the above mentioned uses, chocolate and chocolate foodstuff as defined above, the tigernut product encompasses tigernut flour and tigernut milk, or any derivative of tigernut. Tigernut flour is a preferred tigernut product.
Advantageously in the above uses, chocolate and foodstuff, the chocolate does not contain cereals or derivatives such as soy, rice or inulin.
Advantageously in the above uses, chocolate and foodstuff, the chocolate does not have additional fat, except the one from cocoa butter and from tigernut, and in particular does not contain additional fat, in particular butter oil or fat from vegetables such as coconut oil or oil from nuts.

The invention will be better understood in light of the following figures and examples:

### Legend to the figures

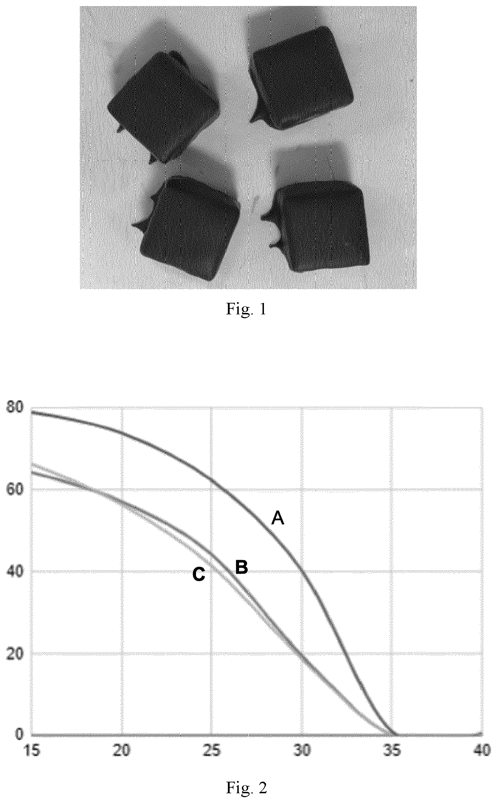

**Figure 1** is a picture of the chocolate product of example 2
**Figure 2** is a graph showing the solid fat content (in %) at over the temperature (°C) of the chocolate of example 1(B) as well as two comparative examples (A : Rice Gluco syrup and Inulin and C: Milk Chocolate).
**Figure 3** is a picture of an experiment of brittleness determination carried out on a dairy free reference chocolate coated ice cream, the chocolate containing rice.
**Figure 4** is a picture of an experiment of brittleness determination carried out on chocolate coated ice cream according to the invention.

### Example 1: production of a chocolate according to the invention

The tigernut (or chufa) flour was obtained from Tigernuts Traders, S.L. from Valencia (ES). It comes from the species Cyperus esculentus Lativum and is a white/brown powder having a maximum moisture content of about 8%, a pH of about 7,3. The powder has a bulk density of 462 kg/m³ and is extra fine, i.e. of particle size < 330 µm. It comprises 5.68 wt.% saturated fat, 19.37 wt.% unsaturated fat 19.4 wt.% sugars, 15.6 wt.% fibres and 61.3 wt.% total carbohydrates. Its fatty acid content mainly comprises oleic acid (about 64 wt.%), palmitic acid (about 15%) and stearic acid (about 4 %). The powder is sterilised by using hot steam so that to reach the microbiological and mycotoxin limits shown in Table 1 below:

**Table 1**

| Microbiological Limits | | Mycotoxin Limits | |
|---|---|---|---|
| Total plate count | <10000 cfu/g | Aflatoxins | <4 µm |
| Enterobacteria | <10 cfu/g | Aflatoxin B 1 | <2 µm |
| Yeasts | <50 cfu/g | Ochratoxin | <3 µm |
| Moulds | < 50 cfu/g | | |
| Salmonella | 2x375g negative | | |
| Coliforms | <10 cfu/g | | |
| Bacillus cereus | <100 cfu/g | | |

### 1. Blending the ingredients - preparing the mix

1405 grams of the above tigernut flour + 2225 grams of sugar + 790 grams of cocoa liquor (at 50°C) + 580 gram cocoa butter (at 50°C) are blended together in a Variomix type blender from KRUPS.

The speed of the blender is adapted during the blending process: a slow rpm at the beginning (to prevent dust formation) and higher towards the end, so that an homogenous paste is obtained. Mixing time was typically 10 minutes at 40-45°C. The starting speed used was about 25ppm ; and the maximum speed used was 50ppm.

### 2. Refining the mix

The homogenous paste was then refined in a typical 3 roll mill refiner from the company Bühler (CH). A chocolate having a fineness of 20 microns was obtained.

### 3. Conching

The refined powder was put in a Bühler Elkolino conche and conched for 2.5 hours at a temperature that should not exceed 90°C, otherwise thickening of the chocolate is observed.

The chocolate thus obtained has a rheology suitable for many applications: linear viscosity range of 1500-2200 mPas and yield value range of 12-16 Pas. Moisture content is max 1%.

### Comparative Example 3 production of standard milk chocolate and standard dairy free chocolate.

In order to compare the properties of the chocolate of the invention a standard milk chocolate and a standard dairy free "milk" chocolate were produced and stored using the same method as mentioned in example 1. They were identical in size and shape.

Likewise, standard milk chocolate pralines and standard dairy free "milk" chocolate pralines were produced and stored using the same method as mentioned in example 2, using a standard milk chocolate and a standard dairy free milk chocolate instead of the chocolate of the invention. They were identical in size and shape.
The composition of these 2 comparative examples are shown below in Table 2, together the composition of the chocolate of the invention of Example 1 :

**TABLE 2**

| | Standard Milk Chocolate (wt.%) | Dairy Free Chocolate with tigernut (example 1 and 2) (wt.%) | Dairy Free Chocolate with rice syrup and inulin (wt.%) |
|---|---|---|---|
| Sugar | 41.96 | 39.47 | 34 |
| Cocoa Butter | 24.05 | 20.7 | 27.17 |
| Cocoa Mass | 11.02 | 14 | 14 |
| Soya Lecithin | 0.6 | 0.7 | 0.7 |
| Natural Vanilla/Vanilla Extract | 0.01 | 0.13 | 0.1 |
| Full Cream Milk Powder | 17.35 | - | - |
| Skimmed Milk Powder | 3.72 | - | - |
| Butter Oil | 1.29 | - | - |
| Tigernut Flour | - | 25 | - |
| Rice Syrup | - | - | 12 |
| Inulin | - | - | 12 |

The napolitains and pralines of Example 1 and 2 had a smooth and milky taste and mouthfeel, comparable to the standard milk chocolate. This was not the case with the standard dairy free chocolate which mouthfeel was similar to a dark chocolate.

All three types of chocolate enrobed nut centre confectionaries, or pralines, were visually evaluated for fat bloom for 10 months. The fat bloom scoring system was as follows:
No fat bloom = 0
Initial Loss of gloss = 1
Sustained loss on gloss = 2
Start of fat bloom = 3
Intermediary fat bloom = 4
Complete fat bloom =5
The results observed each month (M1 to M10) are reported in Table 3 below:

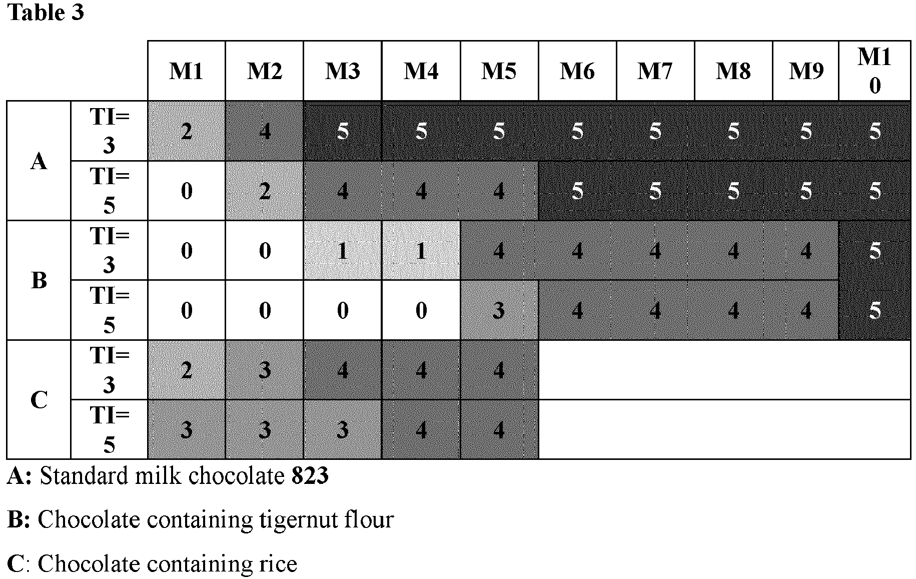

Most unexpectedly the dairy free pralines made according to the invention show a great stability and resistance to fat bloom when enrobing a nut centre. This product has therefore a substantially increased shelf life. By contrast the standard milk chocolate product showed very early fat bloom. Standard dairy-free chocolate showed a very poor resistance to fat bloom. Furthermore undertempered tigernut chocolate with TI 3 is less sensitive to fat bloom compared to real milk chocolate. This is an extra advantage of the chocolate according to the invention.

### Comparative Example 4: Determining the brittleness of ice cream sticks.

### 1. Ice cream dipping trials:

Uncoated ice creams (obtained from Glaces De Smet) were dipped into the various chocolate samples listed below in table 4.

**Table 4**

| | Standard Milk Chocolat e | Dairy Free Chocolate with tigernut | Dairy Free Chocolate with tigernut and coconut oil | Dairy Free Chocolate with rice syrup and inulin |
|---|---|---|---|---|
| Sugar | 38.91 | 36 | 36 | 28 |
| Cocoa Butter | 30.64 | 30.6 | 26.74 | 35.7 |
| Cocoa Mass | 11.49 | 12.5 | 12.5 | 12.5 |
| Soya Lecithin | 0.61 | 0.7 | 0.7 | 0.7 |
| Natural Vanilla/Vanilla Extract | 0.01 | 0.13 | 0.13 | 0.13 |
| Full Cream Milk Powder | 9.76 | - | - | - |
| Skimmed Milk Powder | 2.83 | - | - | - |
| Butter Oil | 5.75 | - | - | - |
| Tigernut Flour | - | 20 | 20 | - |
| Rice Syrup | - | - | - | 11.5 |
| Inulin | - | - | - | 11.5 |
| Coconut oil | | | 3.95 | - |

An attempt was made to obtain an even pick-up weight of the chocolates in order to keep the results comparable. The pick-up weight is the difference between the weight of the uncoated ice cream and the weight of the ice cream after dipping. An even pickup weight was obtained by varying the temperature of the chocolate. The pick-up weight fluctuated around 24 g. The dipping temperature was about 45.7 °C. The drying times, in which the sides on the one hand and the top on the other hand dried, were also noted. The ice creams were kept in the freezer at -20°C.

### 2. Method for brittleness determination:

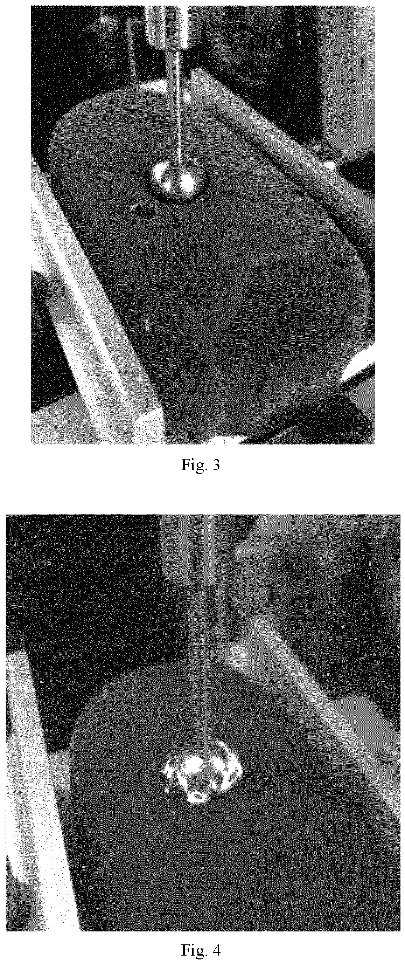

The ice creams prepared as mentioned above were then checked on brittleness. It was examined how deep and how quickly the ice creams break when a force is applied to them. The method is the following one:
The determination of brittleness is done using the texturometer TA.XTplus from Stable Micro Systems. The device measures the force, distance and time of the sample and provides a graphical representation of this. Usually, a load cell of 5 kg is used. For measurements on chocolate that is stored at freezing temperature, the 50 kg load cell is taken as these samples are too hard and the arm of the texturometer can be bent too much. To describe the number of fractures and their shape, the 1/2" Spherical Stainless Probe **(****Figure 3 and 4****)** is used. The ice cream stick is positioned between 2 supports so that it cannot slip. The probe is located centrally above the ice cream at a height of 37 mm. The velocities are self-set, with the probe moving at 1.00 mm/s towards the ice cream, at 0.50 mm/s through the ice cream until a force of 50 N is felt, and returning at 2.00 mm/s. For some ice creams, the force of 50 N is not reached and the test is stopped manually.

The ice creams are removed from the freezer at -20 °C and the test is started after 1 minute waiting time. The amount and shape of the cracks on the ice coating are then visually inspected and compared. Conclusion is that the chufa chocolate shows a similar cracking pattern as butter oil and that the rice recipe shows a lot of unwanted deep cracks.

### Time measurement tests:

Applying pressure to freshly dipped ice cream sticks with a spherical subject (a spoon has been used for this test to push on the sticks) and manual recording of the time where the coating starts to crack.

Typically, the cracking moment of a reference recipe with butter oil is around 3 minutes. If the time is shorter than 3 minutes, it is likely to have too many unwanted cracking in a production environment. If the time is 3 minutes and more unwanted cracking would be avoided.

In order to prolong the cracking time in a vegan recipe either a thicker layer of chocolate coating would be needed which is not a cost effective solution or addition of flexible fat would be needed.

The results of the brittleness measurements are shown in the following table 5.

**Table 5**

| **recipe** | **evaluation** |
|---|---|
| Reference with Butter Oil | Fine cracks, no complete breaking of the coating |
| Dairy free reference rice | Clear breakage of the coating into 3-4 pieces; deep cracks |
| Chufa chocolate | **Fine cracks only that do not come through completely** |

The results of the cracking moment are shown in the following table 6.

**Table 6**

| **recipe** | **Time** |
|---|---|
| Reference with Butter Oil | +/- 3mins |
| Dairy free reference rice | +/- 2 mins |
| tigernut chocolate | +/- 3mins |
| tigernut chocolate + coconut oil | +/- **4mins** |

### Conclusion:

These tests show that a tigernut chocolate according to the invention resists to unwanted breakage when compared to a standard chocolate with butter oil, in particular when used for covering ice-creams with chocolate. Moreover, the tigernut chocolate is more resistant to unwanted breakage compared to reference dairy free chocolate, for this same use.

It is to be noted that addition of vegetable oil increases the cracking time significantly.

## Claims

1. Use of a tigernut product, and in particular a tigernut flour, for preventing, or delaying, or both, fat bloom in a chocolate foodstuff, preferably a dairy-free chocolate foodstuff.

2. The use according to Claim 1, where said chocolate foodstuff has a centre which is enrobed with a chocolate, wherein said centre does have more than 20 wt.% fat, preferably vegetable fat, such as cocoa butter and fat from nuts.

3. The use according to Claim 1 or 2, wherein said tigernut flour consists of particles having a D₉₀ particle size of less than 800 µm, preferably 400 µm.

4. The use according to anyone of claims 1 to 3, wherein said chocolate foodstuff further comprise, or essentially consists of, sugar, cocoa liquor, emulsifier, such as lecithin, and flavouring.

5. A chocolate comprising at least 20 wt. % of a tigernut product, preferably tigernut flour, and at least either cocoa liquor or cocoa butter.

6. The chocolate according to claim 5 comprising:
- from 20 to 60 wt. % of a sweetener, such as a sugars and/or sugar alcohols;
- at least 20 wt. % of tigernut flour; and
- from 0 to 60 wt. % of cocoa liquor, or
- from 0 to 30 wt. % of cocoa butter, or- both,
wherein the chocolate comprises at least either cocoa liquor or cocoa butter.

7. The chocolate according to Claim 6, wherein said tigernut flour consists of particles having a D₉₀ particle size of less than 800 µm, preferably 400 µm.

8. The chocolate according to anyone of Claims 6 to 7, wherein said chocolate product has a solid fat content at 20°C ranging from 50 to 65%, more preferably ranging from 50 to 60%, measured with the stabilizing method at 26°C.

9. A chocolate foodstuff comprising:
- a centre comprising at least 20 wt. % of fat, preferably from cocoa and/or nuts; and
- a coating of said centre comprising the chocolate foodstuff as defined in anyone of claims 1 or 3 to 5, or a product of anyone of claim 6 to 8;
wherein said chocolate preferably comprises at least 25 wt.% of said chocolate product.

10. A method for manufacturing a chocolate foodstuff, and in particular a dairy free chocolate foodstuff, wherein said method comprises a step of mixing at least cocoa butter, cocoa mass and a sweetener with at least 8 wt.% of tigernut flour to obtain a mixture.

11. The method according to claim 10, wherein said tigernut flour consists of particles having a D₉₀ particle size of less than 800 microns, preferably 400 µm.

12. The method according to anyone of claim 10 and 11, wherein said method includes the successive steps of blending said mixture to obtain a blended mixture, refining said blended mixture to obtain a refined mixture, conching said refined mixture to obtain a conched chocolate mixture, eventually finishing said conched mixture by adding a flavouring and/or an emulsifying agent to obtain a finished chocolate mixture.

13. The method according to anyone of claims 10 to 12, wherein said conching step is carried out at a temperature lower than 90°C, preferably ranging from 75°C to 89°C, preferably from 70 to 80°C.

14. Use of a tigernut product containing chocolate, preferably a chocolate according to anyone of claim 5 to 9, for dipping in a frozen foodstuff, in particular an ice cream or a dairy-free ice cream.

15. A frozen foodstuff, in particular an ice cream or a dairy-free ice cream, covered by a tigernut product containing chocolate, preferably a chocolate according to anyone of claim 5 to 9.
